# EUROPEAN PATENT APPLICATION

(11) **EP 2 424 235 A1**
(43) Date of publication of application: **29.02.2012**
(21) Application number: 10008910.1
(22) Date of filing: 27.08.2010
(51) Int. Cl.: H04N 5/64, G06F 1/16

(54) **System for mounting appliances behind a flat panel display**

(71) Applicant: AVCI, 2003 RM Haarlem (NL)
(72) Inventor: Stokman, Herbert, 2003 RM Haarlem (NL)
(74) Representative: Renkema, Jaap

(57) **Abstract**

A system is provided for mounting an appliance behind a flat panel display (200) having VESA-FDMI holes (201, 202, 203, 204). The system comprises a mount board (10) provided with a first connection element (11A, 11B, 11C, 11D, 11E, 11F) by which the board is connectable to the display via the VESA-FDMI holes, a second connection element (12A, 12B, 12C, 12D) and a third connection element (13A, 13B). The system further comprises a support element (20A, 20B) connectable to the board via the second connection element of the board and comprising a support portion having open ends for supporting the appliance thereon. The system further comprises an adjustable fastening element connectable to the board via the third connection element of the board for fastening the appliance against the board.

## Description

### TECHNICAL FIELD

The present invention relates to a system for mounting appliances behind a flat panel display such as a computer screen or television.

### BACKGROUND ART

Flat panel displays are common for entertainment or computer applications and, as a consequence, an internationally recognized standard has been implemented to provide guidelines for attaching the flat panel displays to a wall. It is also known to mount appliances behind these flat panel displays. The VESA-FDMI (Video Electronics Standards Association - Flat panel display Mounting Interface) Standard lists a range of square/rectangular screw hole patterns. Rectangular screw hole patterns have a larger distance in the direction parallel to the top and bottom side of the display (hereinafter referred as the horizontal direction) than the direction perpendicular to the horizontal direction (hereinafter referred as the vertical direction).

Several mounting devices are known for accommodating appliances used together with the display, such as set-top boxes (digital players) and computers.

WO2009/056814A1 discloses a housing for mounting behind a flat panel display with a retractable and/or extendable means to extend to be accessible by a user when the flat panel display is mounted. The housing is intended to enclose one or more electronic devices. The retractable and/or extendable means is a tray that extends for use and retracts for storage into the device.

JP2007-293913 discloses an LCD display and a simplified computer mounted on the back of the display with a mounting element having a side to be screwed via VESA standard holes, an opposite side for holding the simplified computer and a bottom side for supporting the simplified computer.

JP2004-258934 discloses a tray positioned on top of a flat panel display monitor provided with a VESA mount, the tray being attached to the VESA mount and being supported by a support element the length of which is adjustable.

Known mounting devices suffer from the drawbacks that they are complex and/or accommodate only specific appliances.

### DISCLOSURE OF THE INVENTION

An object of the present invention is to provide a simple system for mounting an appliance behind a flat panel display, which does not suffer from the above and/or other drawbacks.

According to the present invention, a system is provided for mounting an appliance behind a flat panel display having VESA-FDMI holes, comprising:
- a mount board provided with a first connection element with which the mount board is connectable to the display via the VESA-FDMI holes, a second connection element and a third connection element;
- a support element connectable to the mount board via the second connection element of the mount board and comprising a support portion having open ends for supporting the appliance thereon; and
- an adjustable fastening element connectable to the board via the third connection element of the mount board for fastening the appliance against the mount board.

The present invention utilizes the VESA- FDMI holes for the attachment of a mount board to the back of a flat panel display. The system according to the present invention provides a simple solution for storing appliances often used together with a display, such as DVD players, computers, game consoles, set top box decoders etc.

An advantage of the present invention is that a wide range of appliances may be mounted on the back of a flat panel display. The fact that the appliance rests on an open ended support allows various types of appliances to be stored behind the display irrespective of the dimensions, especially thickness, of the appliances. The mounted appliance is held by the adjustable fastening means preventing the appliance resting on the support portion of the support element to slide or slip off therefrom.

The first connection element of the mount board may comprise at least one slot having a horizontally elongated shape with its length equal to the distance between two horizontally neighboring VESA-FDMI holes. The mount board can be mounted to the flat panel display by screws or other suitable fastening means through the slot to two VESA-FDMI holes. Preferably, the first connection element of the mount board comprises at least one slot having a horizontally elongated shape with its length larger than the distance between two horizontally neighboring VESA-FDMI holes. The shape and the size of the slot in such embodiments allow adjustment of the horizontal position of the mount board with respect to the flat panel display. For example, this embodiment includes a system for a flat panel display having a 75 mm x 75 mm hole pattern, which has at least one horizontally elongated slot having a length more than 75 mm. Similarly, this embodiment includes a system for a flat panel display having a 400 mm x 400 mm hole pattern, which has at least one horizontally elongated slot having a length more than 400 mm. In the same way, the system according to this invention covers each of the systems for flat panel displays with all possible VESA-FDMI hole patterns, wherein the system comprises a mount board having a horizontally elongated slot with a suitable length.

In the case of the system for a flat panel display with a distance between horizontally neighboring VESA-FDMI holes of 200 mm or less, the length of the slot is preferably at least 2 cm larger than the distance between the horizontally neighboring VESA-FDMI holes. More preferably, the length of the slot is at least 5 cm or at least 10 cm larger than the distance between the horizontally neighboring VESA-FDMI holes. In the case of the system for a flat panel display with a distance between horizontally neighboring VESA-FDMI holes of more than 200 mm, the length of the slot is preferably at least 5 cm, more preferably at least 10 cm, 20 cm or 40 cm larger than the distance between the two horizontally neighboring VESA-FDMI holes.

The first connection element of the mount board may also comprise at least one slot having a vertically elongated shape with its length equal to the distance between two vertically neighboring VESA-FDMI holes. Preferably, the first connection element of the mount board comprises at least one slot having a vertically elongated shape with its length larger than the distance between two vertically neighboring VESA-FDMI holes. This allows adjustment of the vertical position of the mount board with respect to the display having a suitable VESA-FDMI holes dimension. In the same way as the previously described embodiment, the system according to this invention covers each of the systems for flat panel displays with all possible VESA-FDMI hole patterns, wherein the system comprises a mount board having a vertically elongated slot with a suitable length. In the case of the system for a flat panel display with a distance between vertically neighboring VESA-FDMI holes of 200 mm or less, the length of the slot is preferably at least 2 cm larger than the distance between the vertically neighboring VESA-FDMI holes. More preferably, the length of the slot is at least 5 cm or at least 10 cm larger than the distance between the vertically neighboring VESA-FDMI holes. In the case of the system for a flat panel display with a distance between horizontally neighboring VESA-FDMI holes of more than 200 mm, the length of the slot is preferably at least 5 cm, more preferably at least 10 cm, 20 cm or 40 cm larger than the distance between the two vertically neighboring VESA-FDMI holes.

Preferably, the first connection element of the mount board comprises at least two vertically neighboring slots each having a horizontally elongated shape with its length larger than the distance between two horizontally neighboring VESA-FDMI holes. This is extremely advantageous in that the position of the mount board with respect to the display may be vertically shifted by choosing which slot to be used for fixing the mount board to the display. It is possible to connect the upper slot to the upper VESA-FDMI holes or to the lower VESA-FDMI holes. Alternatively, the lower slot may be connected to the upper VESA-FDMI holes or to the lower VESA-FDMI holes. This allows positioning the mount board on the back of the display where the mount board does not cover relevant functions of the flat panel display, such as connectors for related appliances. Preferably, the distance between the vertically neighboring slots matches the distance between two vertically neighboring VESA-FDMI holes. In this case, it is possible to connect the upper slot to the upper VESA-FDMI holes and the lower slot to the lower VESA-FDMI holes. Use of the two slots of the mount board fixes the mount board more securely to the flat panel display. It is also possible that the first connection element of the mount board comprises at least two horizontally neighboring slots each having a vertically elongated shape with its length larger than the distance between two vertically neighboring VESA-FDMI holes. Preferably, the distance between the horizontally neighboring slots matching the distance between two horizontally neighboring VESA-FDMI holes.

Preferably, the first connection element of the mount board comprises at least three vertically neighboring slots each having a horizontally elongated shape with its length larger than the distance between two horizontally neighboring VESA-FDMI holes. Preferably, each of the distances between the vertically neighboring slots matches the distance between two vertically neighboring VESA-FDMI holes. This is extremely advantageous in that the position of the mount board with respect to the display may be vertically shifted considerably by choosing which two slots to be used for fixing the mount board to the display, while securely fixing the mount board to the display by the use of two slots. It is also possible that the first connection element of the mount board comprises at least three horizontally neighboring slots each having a vertically elongated shape with its length larger than the distance between two vertically neighboring VESA-FDMI holes. Preferably, each of the distances between the horizontally neighboring slots matching the distance between two horizontally neighboring VESA-FDMI holes. In this case, the display may be horizontally shifted considerably.

In one embodiment, the first connection element comprises a plurality of, preferably at least 4, holes arranged in a pattern matching the VESA-FDMI holes pattern. More preferably, the first connection element comprises at least 8 holes arranged in a pattern matching two VESA-FDMI holes patterns. Even more preferably, the first connection element comprises at least 12 holes arranged in a pattern matching three VESA-FDMI holes patterns.

Preferably, the mount board comprises an indented area around the first connection element of the mount board, the indented area being indented towards the display when attached. This can prevent the head of the screws or other fastening means inserted in the VESA-FDMI holes to protrude from the surface of the mount board. This is advantageous in that the risk of the appliance being damaged by protruding screw heads is reduced.

Preferably, the second connection element of the mount board comprises a slot into which the support element is insertable. As long as the support element can be partly inserted therein and can be fixed in a position in which the support portion extends substantially perpendicular to the mount board to support appliance, the slot may have any shape. For example, the slot may be circular and the support element may be a board provided with a screw extending in the same plane as the board at one end thereof. In this case, this screw may be inserted in the slot and fastened by suitable means, whereby the support element is fixed to the mount board and the support portion extends substantially perpendicular to the mount board.

Preferably, the second connection element comprises a slot and the support element comprises a portion insertable into the slot of the second connection element to be retained between the display and the mount board when the mount board is mounted to the display. In this embodiment, the support portion extends in a substantially perpendicular direction to the portion insertable into the slot of the second connection element. When the insertable portion is inserted through the slot, the insertable portion is held between the display and the mount board and retained there. Preferably, more than one support element is used. A plurality of support elements may be inserted in one slot. The mount board may also be provided with more than one slot.

Preferably, the support element further comprises a joint portion between the support portion and the insertable portion, the joint portion comprising a first joint portion extending substantially perpendicular from the support portion and a second joint portion extending substantially perpendicular from the insertable portion. This is advantageous in that the joint portion allows the support element to rest on the slot of the second connection element even when there is no appliance on the support portion.

Preferably, the support element further comprises a protrusion between the support portion and the first joint portion, protruding in the direction away from the second joint portion. The protrusion further improves the stability of the attachment of the support element to the mount board.

Preferably, the mount board further comprises a support assisting member provided below the second connection element, having a supporting face for supporting the support element. The support assisting member assists the supporting element in supporting appliances by allowing the support portion of the supporting element to rest thereon. The support assisting member may be formed at the bottom of the mount board from the bottom part of the mount board bent perpendicular to the face of the mount board..

Preferably, the supporting face is provided with a slot extending parallel to the slot of the second connection element, into which slot the protrusion of the support element is insertable. This arrangement further improves the stability of the attachment of the support element to the mount board and the function of the support element.

Preferably, the third connection element comprises a first slot and a second slot and the fastening means comprises a band comprising ends which are connectable to the first slot and the second slot. The ends may be constructed in various ways so that they may be connected to the slots. The length of the fastening means may be adjustable to fit the size, especially thickness of the appliance when the ends are connected to the third connection element.

Alternatively, the fastening means comprises a first band connectable to the first slot and a second band connectable to the second slot, and the first band and the second band have open ends which are connectable to each other. The open ends may be provided with hook-and-loop fasteners (e.g. Velcro (R), a button and several holes, a buckle and the like. After an appliance is placed on the support portion, the first band and the second band are connected to each other to hold the appliance in place and prevents it from falling over in the direction away from the mount board.

The first and the second slots of the third connection element are preferably arranged in horizontally substantially same positions. The adjustable fastening element may also be in a form of a loop and be elastic. The loop is attached to the mount board by passing through said two slots of the third connection element of the mount board. In this case, an appliance may be inserted in the loop until it reaches the support portion, and the elastic loop holds the appliance in position. The adjustable fastening element may also be an elastic band whose both ends are attached to the mount board. Also in this case, an appliance may be inserted in the loop until it reaches the support portion. The mount board may also have more than one pair of slots and more than one corresponding adjustable fastening means.

The mount board may further comprise an opening. This is advantageous in that a light mount board is achieved and the opening provides possibility for preventing relevant functions of the flat panel display to be covered, such as connection holes to related appliance. Preferably, the opening is at least 4 cm², more preferably at least 10 cm².

The mount board is preferably smaller than the flat panel display on which it is mounted.

The mount board may either be rigid or flexible. The mount board may also be partly rigid and partly flexible. Preferably, the mount board is rigid in view of obtaining a higher strength.

Preferably, the system further comprises an infrared receiver. If the appliance mounted in the mount board operates by an infrared from e.g. a remote controller, it is advantageous that an infrared receiver connected to the appliance is placed in a location reachable by the infrared.

According to a further aspect of the invention, a mount board as described above is provided.

Preferably, the mount board is made from one piece of a plate-shaped material. This is advantageous in easy manufacturing and strength of the mount board. Accordingly, a process for making the mount board according to the present invention is provided, wherein the mount board is made by bending one piece of a plate-shaped material. It will be appreciated that the plate-shaped material may be of metal or polymer or the like. Metals such as steel and aluminum are preferred for their strength. It will also be appreciated that the mount board may be square, rectangular or any other polygonal shape, or circular, oval or any other suitable shape.

According to a further aspect of the invention, a support element as described above is provided.

Preferably, each of the support element is made from one piece of a plate-shaped material. This is advantageous in easy manufacturing and strength of the support element. Accordingly, a process for making the support element according to the present invention is provided, wherein the support element is made from one plate.

It is noted that the invention relates to all possible combination of features recited in the claims. It is specifically mentioned that especially the combinations of the features relating to the first connection element, the features relating to the support element and the second connection element, and the features relating to the fastening element and the third connection element are part of the invention.

### BRIEF DESCRIPTION OF THE DRAWINGS

These and other aspects of the invention will be apparent from and elucidated with reference to the drawings in which:
Figure 1 shows a perspective view of the back of a flat panel display provided with VESA-FDMI holes;
Figure 2 shows a perspective view of one embodiment of the mount board and the support element according to the present invention attached to the flat panel display of figure 1;
Figure 3 shows an enlarged view of the support element of figure 2;
Figure 4 shows the embodiment of figure 2 where an appliance (e.g. set top box) is mounted on the mount board;
Figure 5 shows the embodiment of figure 4 further with one embodiment of the adjustable fastening element according to the present invention;
Figure 6 shows an enlarged bottom perspective view of the embodiment of figure 5;
Figure 7A-7D show various embodiments of the mount board according to the present invention;
Figure 8A-8C show various embodiments of the support element according to the present invention.

### DETAILED DESCRIPTION OF EMBODIMENTS

It is noted that the same reference numbers have been used for corresponding elements in the embodiments wherever possible.

In the description, terms 'higher' and 'lower' vertical positions (and terms above and below) are used to indicate a vertical positions in or of the mount board when the board is attached to the display, where the higher vertical position refers to a position closer to the top of the display than the lower vertical position.

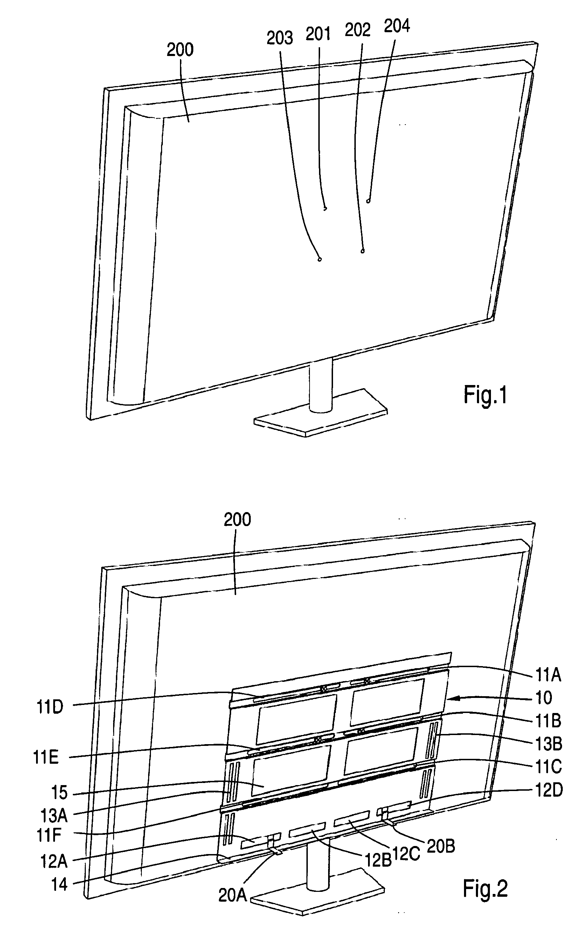

Figure 1 shows a perspective view of the back of a flat panel display 200 provided with four VESA-FDMI holes 201, 202, 203, 204. A mount board according to the present invention is to be attached to the back of the flat panel via the VESA-FDMI holes 201, 202, 203, 204.

Referring to Figure 2, a perspective view is shown of a flat panel display 200 and a mount board 10 according,to the invention mounted behind it and two support elements 20A and 20B connected to the mount board 10. The mount board 10 comprises a first connection element in the form of slots 11A-11F, a second connection element in the form of slots 12A, 12B, 12C and 12D and a third connection element in the form of slots 13A and 13B, a support assisting member 14 as well as holes 15. The mount board 10 is a plate which is bent and punctured to form the final shape. Each of the support elements 20A and 20B is a plate which is bent to form the final shape.

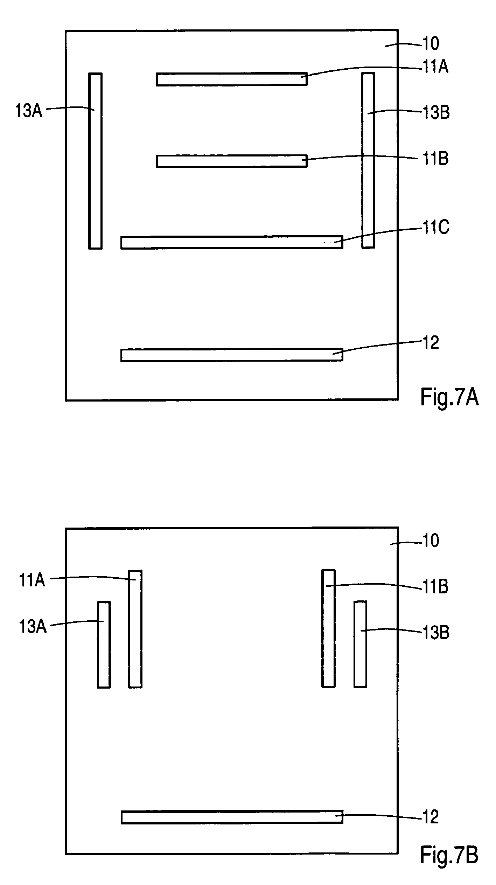

The mount board 10 has six slots 11A-11F elongated in the horizontal direction of the display. The slots 11A, 11B and 11C are vertically positioned such that the distance between the slot 11A and 11B and 11B and 11C has a distance which matches the VESA-FDMI holes pattern. The slots 11D, 11E and 11F are arranged in a similar manner. In the figure, the mount board 10 is attached to the flat panel display 200 by means of screws penetrating through the slots 11A, 11B, 11D and 11E into the VESA-FDMI holes 201, 202, 203, 204 in the back of the display 200. The mount board comprises an indented area around slots 11A-11F of the first connection elements of the mount board, the indented area being indented towards the display 200 when the mount board 10 is attached to the display.200. If desired, the mount board 10 may be positioned higher by using the connection elements 11B, 11C, 11E and 11F. It is also possible to shift the mount board 10 horizontally to a desired position by fixing the screws to different horizontal locations. The holes 15 may be used to provide a window for any cables or other connectors, so that they are not covered by the mount board 10. Due to the flexibility in the positioning of the mount board 10 provided by these features, the mount board 10 can be mounted to the back of a flat panel display 200 having various types of configurations. Pairs of horizontally neighboring slots (11A and 11D; 11B and 11E; 11C and 11F) may also be made into one slot, as can e.g. be seen in Fig. 7A.

The mount board 10 in this embodiment further has a second connection element in the form of slots 12A, 12B, 12C and 12D elongated in the direction parallel to the first connection element 11A-11F. Second connection elements 12A-12D are positioned side-by-side, i.e. horizontally neighboring. The mount board 10 in this embodiment further comprises a support assisting member 14 in the form of the bottom part of the mount board 10 bent in the direction away from the display.

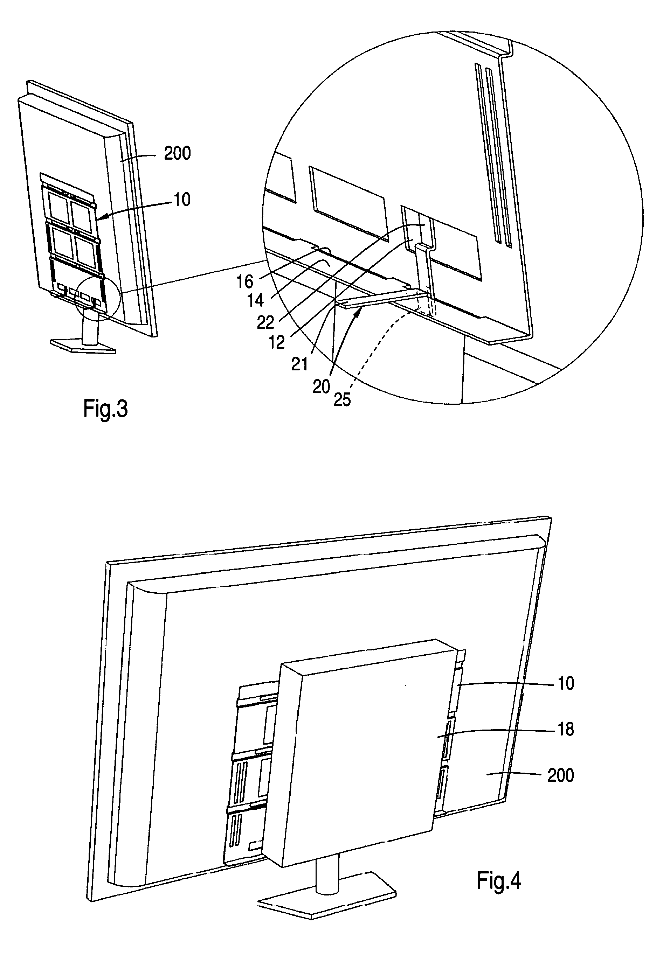

Figure 3 shows an enlarged view of the area around the support element 20 of figure 2. The support assisting member 14 is provided with slots 16 extending parallel to and having the same length as the slots 12 of the second connection elements, respectively. The insertable part 22 of the support element 20 is inserted in the space between the mount board 10 and the display 200, sandwiched by the mount board 10 and the display 200. The protrusion 25 of the support element 20A is fitted in the slot 16 of the support assist member 15. The support part 21 extends substantially vertically from the mount board 10 and the display 200 away from the display 200. An appliance, not shown in the figure, may be placed on the support parts 21 of the support elements 20 to be supported thereby. The shape of the slots 12A-12D and the support element 20 allows adjustment of the horizontal positioning of the support element 20, which allows arranging the support element 20 in a position where it does not block any relevant features of the appliance or the flat panel display.

Figure 4 shows the embodiment of figure 2 where an appliance (e.g. a set top box) 18 is mounted on the mount board 10.

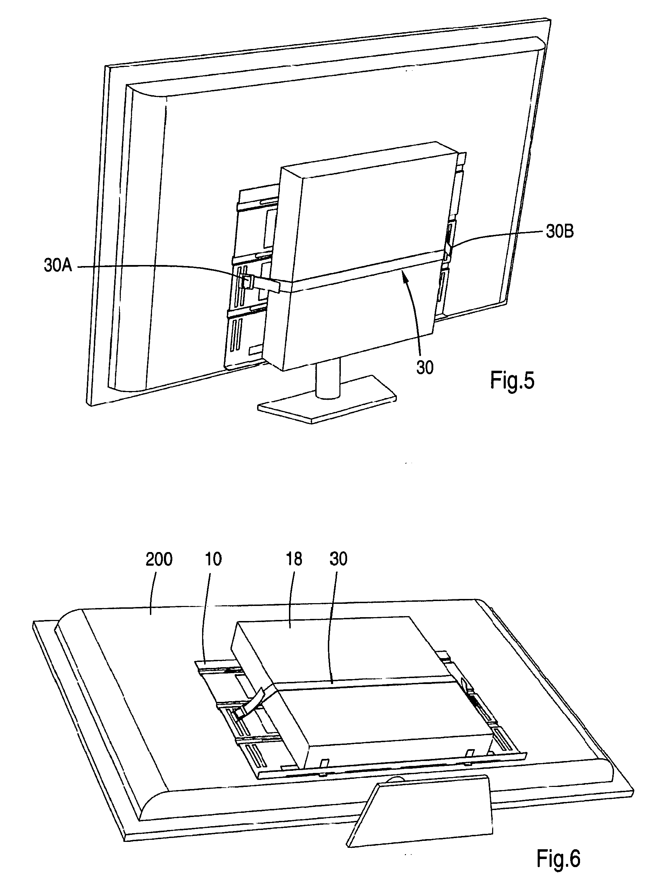

Figure 5 shows the embodiment of figure 4 further with one embodiment of the adjustable fastening element 30 according to the present invention. The mount board 10 in this embodiment further has a third connection element in the form of a pair of horizontally elongated slots and a bar between the slots. The adjustable fastening element 30 is in the form of a band with both ends 30A and 30B provided with connection means. Each of the ends 30A and 30B are connectable to the third connection elements by means of a buckle. When an appliance is placed on the support element 20, the end portions 30A and 30B of the adjustable fastening element 30 are fastened to maintain the appliance 18 in position so that it does not slide or fall from the support element 20A and 20B.

Figure 6 shows an enlarged bottom perspective view of the embodiment of figure 5, showing the three essential components of the system according to the present invention.

Figure 7A shows a front view of one embodiment of the mount board 10 according to the present invention. The first connection element comprises three horizontally elongated slots 11A, 11B and 11C, vertically distanced to match a VESA-FDMI holes pattern. Below the slot 11C, a second connection element in the form of a long horizontally elongated slot 12 is present. On both sides of the ends of the first connection elements 11A, 11B and 11C, a third connection element in the form of two long horizontally elongated slots 13A and 13B are present.

Figure 7B shows a front view of a further embodiment of the mount board 10 according to the present invention. The first connection element comprises two vertically elongated slots 11A and 11B, horizontally distanced to match a VESA-FDMI holes pattern. Below the slot 11B, a second connection element in the form of a long horizontally elongated slot 12 is present. On both sides of the first connection elements 11A and 11B, a third connection element in the form of two long vertically elongated slots 13A and 13B are present.

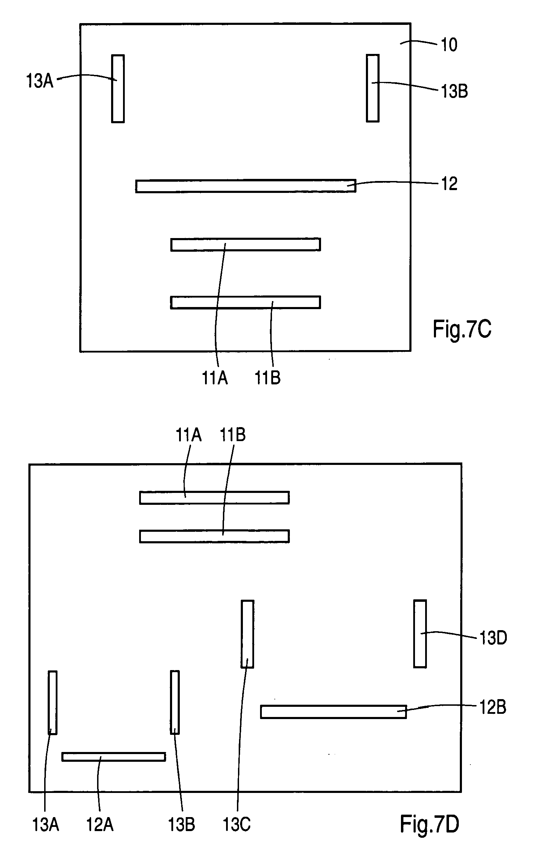

Figure 7C shows a front view of a further embodiment of the mount board 10 according to the present invention. The first connection element comprises two horizontally elongated slots 11A and 11B, vertically distanced to match a VESA-FDMI holes pattern. Above the slot 11A, a second connection element in the form of a long horizontally elongated slot 12 is present. A third connection element in the form of two horizontally elongated slots 13A and 13B are present in a vertically higher position with respect to the slot 12.

Figure 7D shows a front view of a further embodiment of the mount board 10 according to the present invention. The first connection element comprises two horizontally elongated slots 11A and 11B, vertically distanced to match a VESA-FDMI holes pattern. Two second connection elements 12A and 12B in the form of a horizontally elongated slot with different lengths are present in a vertically different position. Two horizontally elongated slots 13A and 13B which form part of the third connection element are present in a vertically higher position with respect to the slot 12A. Similarly, two horizontally elongated slots 13C and 13D which form part of the third connection element are present in a vertically higher position with respect to the slot 12B.

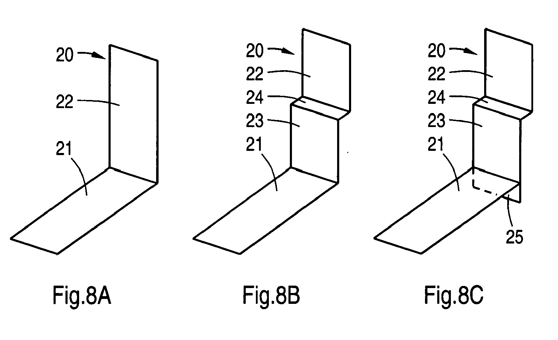

Figure 8A shows a perspective view of an embodiment of the support element 20 according to the present invention. The support elements 20 is a thin rectangular plate bent 90 degrees. The support elements 20 comprises a support part 21 having an open end and an insertable part 22 extending from the opposite end of the support part 21 perpendicularly to the support part 21. Figure 8B shows a perspective view of a further embodiment of the support element 20 according to the present invention. The support elements 20 comprises a support part 21 having an open end and an insertable part 22 extending perpendicularly to the support part 21. Between the support part 21 and the insertable part 22 a first joint part 23 and a second joint part 24 are present. The first joint part 23 extends from the end of the support part 21 opposite from the open end perpendicularly to the support part 21. The second joint part 24 extends from the end of the insertable part 22 opposite from the open end perpendicularly to the insertable part 22.

Figure 8C shows a perspective view of a further embodiment of the support element 20 according to the present invention. This embodiment is identical to the support element 20 of figure 8B except that a protrusion 25 is provided at the joint of the support part 21 and the first joint part 23.

## Claims

1. A system for mounting an appliance (18) behind a flat panel display (200) having VESA-FDMI holes (201, 202, 203, 204), comprising:
- a mount board (10) provided with a first connection element (11A, 11B, 11C, 11D, 11E, 11F) with which the mount board is connectable to the display via the VESA-FDMI holes, a second connection element (12A, 12B, 12C, 12D) and a third connection element (13A, 13B);
- a support element (20A, 20B) connectable to the mount board via the second connection element of the mount board and comprising a support portion (21A, 21 B) having open ends for supporting the appliance thereon; and
- an adjustable fastening element (30) connectable to the mount board via the third connection element of the mount board for fastening the appliance against the mount board.

2. The system according to claim 1, wherein the first connection element of the mount board comprises at least one slot (11A-11F); having a horizontally elongated shape with its length larger than the distance between two horizontally neighboring VESA-FDMI holes.

3. The system according to claim 1, wherein the first connection element of the mount board comprises at least one slot (11A-11F) having a vertically elongated shape with its length larger than the distance between two vertically neighboring VESA-FDMI holes.

4. The system according to claim 1, wherein the first connection element of the mount board comprises at least two vertically neighboring slots (11A-11F) each having a horizontally elongated shape with its length larger than the distance between two horizontally neighboring VESA-FDMI holes.

5. The system according to claim 4, wherein the distance between the vertically neighboring slots matches the distance between two vertically neighboring VESA-FDMI holes.

6. The system according to claim 1-5, wherein the mount board comprises an indented area around the first connection element of the mount board, the indented area being indented towards the display when the mount board is attached to the display.

7. The system according to any one of claims 1-6, wherein the second connection element comprises a horizontally elongated slot and the support element comprises a portion (22A, 22B) insertable into the slot of the second connection element to be retained between the display and the mount board when the mount board is attached to the display.

8. The system according to claim 7, wherein the support element further comprises a joint portion (23, 24) between the support portion and the insertable portion, the joint portion comprising a first joint portion (23) extending substantially perpendicular from the support portion and a second joint portion (24) extending substantially perpendicular from the insertable portion,

9. The system according to claim 8, wherein the support element further comprises a protrusion (25) between the support portion and the first joint portion, protruding in the direction away from the second joint portion, wherein the mount board further comprises a support assisting member (14) provided below the second connection element, having a supporting face for supporting the support element and wherein the supporting face is provided with a slot (16) extending parallel to the slot of the second connection element, into which slot the protrusion of the support elements is insertable.

10. The system according to any one of claims 1-9, wherein the third connection element comprises a first slot (13A) and a second slot (13B) and the fastening means comprises a band connection element comprising ends (30A, 30B) which are connectable to the first slot and the second slot.

11. The system according to any one of claims 1 -10, wherein the third connection element comprises a first slot (13A) and a second slot (13B) and the fastening means comprises a first band connectable to the first slot and a second band connectable to the second slot, and wherein the first band and the second bands have open ends which are connectable to each other.

12. The system according to any one of claims 1-11, wherein the mount board is not visible from the front side of the flat panel display when the mount board is attached to the display.

13. The system according to claim 1-12, further comprising an infrared receiver.

14. The mount board as defined in the system according to any one of claims 1-13.

15. The support element as defined in the system according to any one of claims 1-13.
